# EUROPEAN PATENT SPECIFICATION

(11) **EP 0 308 517 B1**
(45) Date of publication and mention of the grant of the patent: **22.02.1995**
(21) Application number: 88902949.2
(22) Date of filing: 01.04.1988
(51) Int. Cl.: A47L 9/28

(54) **VACCUM CLEANER**
STAUBSAUGER
ASPIRATEUR

(30) Priority: 02.04.1987 JP 81441/87
(43) Date of publication of application: 29.03.1989
(73) Proprietor: MATSUSHITA ELECTRIC INDUSTRIAL CO., LTD., Kadoma-shi, Osaka-fu, 571 (JP)
(72) Inventor: HAYASHI, Nobuhiro, Echi-gun Shiga-ken (JP); TANAKA, Toshiichiro, Youkaichi-shi Shiga-ken (JP); YAMAGUCHI, Seiji, Kouga-gun Shiga-ken (JP); IMAI, Hidetoshi, Youkaichi-shi Shiga-ken (JP)
(74) Representative: Pellmann, Hans-Bernd, Dipl.-Ing.
(86) International application number: PCT/JP88/00337
(87) International publication number: WO 88/07347

(56) References cited:
- EP-A- 210 547
- EP-A- 0 178 335
- EP-A- 0 217 216
- GB-A- 2 016 910
- JP-A-59 148 594
- JP-U- 5 619 161
- JP-Y- 4 714 378

## Description

### FIELD OF THE INVENTION

The present invention relates to an electric vacuum cleaner generally used in home which is capable of controlling input power for a motor blower contained in the body of the electric vacuum cleaner by a switch provided to the handle portion of a hose.

### BACKGROUND OF THE INVENTION

For example, in a USP 4,601,082, an electric vacuum cleaner has been disclosed which is capable of controlling rotation of an electric motor for a suction fan in accordance with the indication made in accordance with the detected amount of dust under sucking. However, in the above-mentioned prior art, it is impossible to temporarily control suction force, irrespective of the detection signal. Therefore, there is an inconvenience for actual use.

For example, in Japanese patent application provisional publication No. 59-14594, an electric vacuum cleaner has been disclosed which is capable of controlling suction force by a handle switch provided to a handle of the electric vacuum cleaner having a motor for a suction fan and an AC motor of floor-suction-inlet electric drive. However, the electric vacuum cleaner disclosed in the Japanese patent application provisional publication No. 59-14594 has a drawback that when the handle switch is operated, input power for the motor blower changes gradually, thus, decreasing rotational frequency of the AC motor of the floor-suction-inlet electric drive. Therefore, this fact does not provide an operation feeling of the handle switch, but gives the operator only a strange feeling.

Document EP-A-0 210 547 discloses a vacuum cleaner whose suction power can be manually set by means of a switch to different power suction levels and which comprises indication means for indicating these different power suction levels.

Document EP-A-0 217 216 discloses an electric vacuum cleaner which automatically changes a suction force in accordance with the amount of dust passing through a suction air path in an automatic mode and which can be switched by an operator into a manual maximum stage or a minimum stage. The disclosed apparatus, therefore, comprises dust detection means for detecting an amount of dust passing through the suction air path, control means for controlling a suction force of the electric vacuum cleaner in accordance with the detected amount of dust, and indication means for indicating the amount of dust and the degree of suction force in automatic control operation.

However, the above mentioned prior art is not capable, in case the operator desires to set the suction power to a maximum power or to a minimum power temporarily, to control the suction force of the vacuum cleaner, irrespective of the detected amount of dust.

With such a conventional vacuum cleaner a problem occurs if the suction force is deemed to be too high or too low in automatic mode. In order to set the conventional vacuum cleaner from automatic into manual mode and vice versa, the operator has to set a switch. Since this switch is usually located at the main body of the vacuum cleaner, the switching of the vacuum cleaner for effecting a maximum or a minimum suction force is difficult and complicated.

### DISCLOSURE OF THE INVENTION

It is therefore an object of the present invention to provide an electric vacuum cleaner having automatic operation function being capable of changing suction force of a motor blower in accordance with a detection signal which is obtained by detecting the amount of dust passing through the hose, which is capable of changing suction force temporarily in an easy and comfortable manner, as desired by an operator even if the electric vacuum cleaner is set in automatic operation mode.

According to the present invention this object is achieved by an electric vacuum cleaner comprising dust detection means for detecting an amount of dust passing through a suction path of the electric vacuum cleaner, and control means for controlling a suction force of the electric vacuum cleaner in accordance with the detected amount of dust in an automatic operation, characterized by manual operation switch means responsive to a manual operation for temporarily controlling the suction force irrespective of the detection of the amount of dust, wherein the suction force is always set directly to either a maximum suction force or a minimum suction force.

### BRIEF DESCRIPTION OF THE DRAWINGS

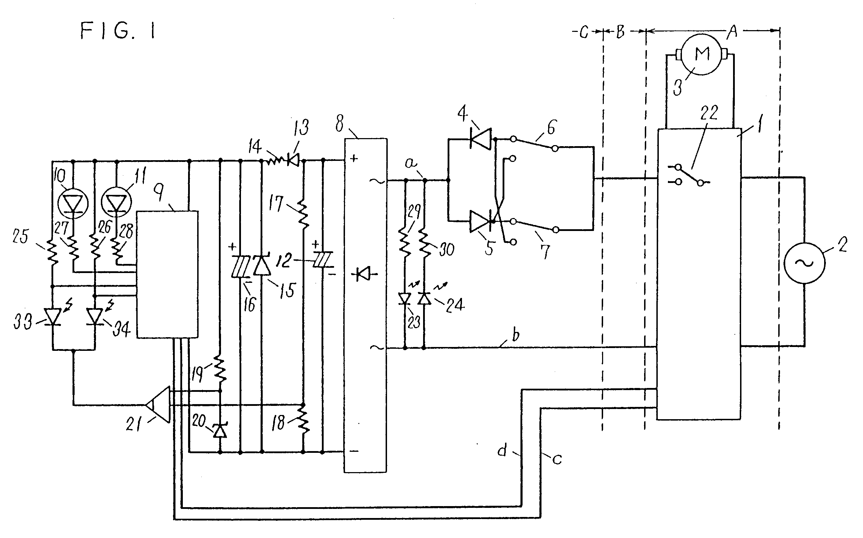

Fig. 1 is a schematic circuit diagram showing an embodiment of the present invention of the electric vacuum cleaner.

In Fig. 1, a control circuit 1 controls a motor blower 3 which is contained in the body A of an electric vacuum cleaner and is connected to a power supply 2. A circuit having diodes 4, 5, UP-switch 6, and DOWN-switch 7 is interposed in the middle of one of the two conductors "a" and "b" which are passed through a hose B of the electric vacuum cleaner, at the handle portion C of the hose. In the circuit, diodes 4, 5 connected in inverse-parallel each other and the UP-switch 6 and the DOWN-switch 7 are connected to diodes 4, 5 in series respectively. The conductors "a", "b" supply power through a diode bridge 8 to a dust detection circuit 9 for detecting dust passing through a hose. That is, the power source circuit of the dust detection circuit 9 is a regulated power source comprising a diode bridge 8 for full-wave rectifying AC current applied to the above-mentioned two conductors "a", "b", a capacitor 12 for smoothing the rectified current, a zener diode 15 and a capacitor 16, and a diode 13 and resistor 14 for transferring smoothed current to the zener diode 15 and the capacitor 16. A comparator 21 compares a potential which is obtained by dividing a potential from non-regulated DC voltage power supply portion by resistors 17, 18 with a reference potential obtained from a regulated DC voltage power supply portion. Numeral 22 is a select switch for changing operation mode into automatic control operation and manual operation. Numerals 23, 24 are light emitting diodes (LED) which are connected in inverse-parallel each other, then connected diodes are interposed between two conductors a, b which are provided between the diode bridge 8 and the diodes 4, 5. Photodiodes 33, 34 are connected to a comparator 21. The photodiodes 33, 34 and the above-mentioned LEDs 23, 24 constitute a photocoupler respectively for transmitting and receiving a signal. LEDs 23, 24 are connected to current-limiting resistors 29, 30 respectively. Photodiodes 33, 34 are connected to resistors 25, 26 for pull-up.

LEDs 10, 11 as indication elements are connected to the dust detection circuit 9 through current-limit resistors 27, 28 respectively. Conductors "c", "d" send a signal from the dust detection circuit 9 to the control circuit 1 of the body A of the electric vacuum cleaner.

Hereinbelow will be described operation of the above-mentioned structure. When the select switch 22 is set in manual mode, the control circuit 1 operates so as to increase and decrease input power (suction force) of the motor blower 3 in response to operations of handle switches 6, 7 respectively. In this mode, the signal from the dust detection circuit 9 is not recognized as a control signal for the motor blower 3. Such operation is similar to that of technique disclosed in Japanese patent application provisional publication No. 59-148594 which has been described above as a prior art.

When the select switch 22 is set in automatic mode, the conductors a, b function as a power supply line for the dust detection circuit 9. Here, when the amount of dust is greater than a predetermined amount, the LED 10 is turned on in respose to the output of the dust detection circuit 9, as well as, the signal is sent to the control circuit 1 of the body of A of the electric vacuum cleaner through conductors c, d, then, the motor blower 3 is operated with a large input power. When the amount of dust is small, the LED 11 is turned on and the motor blower 3 is operated with a small power. This operation is made in such a way as to be performed with (a) predetermined time constant(s).

When the switch 6 or switch 7 is turned on, either of LED 23 or LED 24 turns on in correspondence with the switch 6 or switch 7 because the diodes 4, 5 are connected in inverse parallel each other as well as the LEDs 23, 24 are connected in inverse parallel each other. Further, turning either of switch 6 or switch 7 on causes power supply applied to the diode bridge 8 to have a half-wave form. Therefore, setting the comparator 21 so as to provide output LO when an output voltage of the diode bridge 8 decrease causes either of the photodiode 33 or photodiode 34 to turn on because the LED 23 or LED 24 turns on. This provides a signal which is sent to an input of the dust detection circuit 9, turning LED 10 or LED 11 on as well as setting input power of the motor blower 3 small or large for a predetermined interval.

It is common to the manual and automatic control operations which are set by the select switch 22 that the operation of the handle (UP-)switch 6 or handle (DOWN-)switch 7 causes LED 10 or LED 11 to turn on through the signal of the dust detection circuit. This means that operation of the handle (UP-)switch 6 causes LED 10 for indicating large input power state to turn on and operation of the handle (DOWN-)switch 7 causes LED 11 for indicating small input power state to turn on.

### INDUSTRIAL APPLICABILITY

As stated above, a useful electric vacuum cleaner is provided because there is provided the function that if the operator uses the electric vacuum cleaner where this electric vacuum cleaner would operate with a low suction force in automatic operation mode, and if the operator desires to operate the electric vacuum cleaner at a high suction force locally, the operator can operate the electric vacuum cleaner with a high suction force with a switch operation and when the operator stops switch operation, the electric vacuum cleaner returns to the original automatic operation after a predetermined time period passed and also provided the function that switch operation and automatic operation states are provided to the operator as signals for an easy judgement by the operator, so that there is provided a very useful electric vacuum cleaner because when the user operates the switch in the suction force incremental or decremental direction, the vacuum cleaner informs the operator by flickering LED, in a similar manner to indicating automatic control operation state, irrespective of operation modes; manual and automatic control operation modes.

## Claims

1. An electric vacuum cleaner comprising
dust detection means (9) for detecting an amount of dust passing through a suction path of said electric vacuum cleaner, and
control means (1) for controlling a suction force of said electric vacuum cleaner in accordance with the detected amount of dust in an automatic operation,
**characterized by**
manual operation switch means (6, 7) responsive to a manual operation for temporarily controlling said suction force irrespective of the detection of said amount of dust, wherein said suction force is always set directly to either a maximum suction force or a minimum suction force.

2. An electric vacuum cleaner as claimed in claim 1,
**characterized by** indication means (10, 11) for indicating that said suction force is controlled to a predetermined level temporary irrespectively of the detection of said amount of dust.

3. An electric vacuum cleaner as claimed in claim 1,
**characterized in that** said manual operation switch means (6, 7) comprises a first switch (6) for controlling said suction force to a first Predetermined level and a second switch (7) for controlling said suction force to a second predetermined level, said first pedetermined level being larger than said second predetermined level.

4. An electric vacuum cleaner as claimed in claim 3,
**characterized by** a first indication means (10) for indicating that said suction force is controlled to said first predetermined level and a second indication means (11) for indicating that said suction force is controlled to said second predetermined level.

## Patentansprüche

1. Elektrischer Staubsauger, mit:
einer Stauberfassungseinrichtung (9) zum Erfassen einer durch einen Saugpfad des elektrischen Staubsaugers strömenden Staubmenge, und
einer Steuereinrichtung (1) zum Steuern einer Saugkraft des elektrischen Staubsaugers in Übereinstimmung mit der erfaßten Staubmenge bei einen automatischen Betrieb,
**gekennzeichnet durch**
eine manuelle Bedienschaltereinrichtung (6, 7), die auf eine manuelle Bedienung zum zwischenzeitlichen Steuern der Saugkraft unabhängig von der Erfassung der Staubmenge anspricht, wobei die Saugkraft immer entweder auf eine maximale Saugkraft oder eine minimale Saugkraft direkt eingestellt wird.

2. Elektrischer Staubsauger nach Anspruch 1,
**gekennzeichnet durch**
eine Anzeigeeinrichtung (10, 11) zum Anzeigen, daß die Saugkraft auf einen vorbestimmten Pegel gesteuert wird, der zwischenzeitlich unabhängig von der Erfassung der Staubmenge ist.

3. Elektrischer Staubsauger nach Anspruch 1,
**dadurch gekennzeichnet, daß**
die manuelle Bedienschaltereinrichtung (6, 7) einen ersten Schalter (6) zum Steuern der Saugkraft auf einen ersten vorbestimmten Pegel und einen zweiten Schalter (7) zum Steuern der Saugkraft auf einen zweiten vorbestimmten Pegel umfaßt, wobei der erste vorbestimmte Pegel größer ist als der zweite vorbestimmte Pegel.

4. Elektrischer Staubsauger nach Anspruch 3,
**gekennzeichnet durch**
eine erste Anzeigeeinrichtung (10) zum Anzeigen, daß die Saugkraft auf den ersten vorbestimmten Pegel gesteuert wird, und eine zweite Anzeigeeinrichtung (11) zum Anzeigen, daß die Saugkraft auf den zweiten vorbestimmten Pegel gesteuert wird.

## Revendications

1. Aspirateur électrique comportant :
des moyens de détection de poussière (9) pour détecter la quantité de poussière passant par un chemin d'aspiration dudit aspirateur électrique, et
des moyens de commande (1) pour commander la force d'aspiration dudit aspirateur électrique en fonction de la quantité détectée de poussière au cours d'un fonctionnement automatique, caractérisé par
des moyens de commutation de fonctionnement manuel (6, 7) réagissant à un actionnement manuel en commandant temporairement ladite force d'aspiration indépendamment de la détection de ladite quantité de poussière, dans lesquels ladite force d'aspiration est toujours directement établie soit à une force d'aspiration maximale soit à une force d'aspiration minimale.

2. Aspirateur électrique selon la revendication 1, caractérisé par des moyens d'indication (10, 11) pour indiquer que ladite force d'aspiration est commandée à un niveau prédéterminé de façon temporaire indépendamment de la détection de ladite quantité de poussière.

3. Aspirateur électrique selon la revendication 1, caractérisé en ce que lesdits moyens de commutation de fonctionnement manuel (6, 7) comportent un premier commutateur (6) pour commander ladite force d'aspiration à un premier niveau prédéterminé et un deuxième commutateur (7) pour commander ladite force d'aspiration a un deuxième niveau prédéterminé, ledit premier niveau prédéterminé étant plus élevé que ledit deuxième niveau prédéterminé.

4. Aspirateur électrique selon la revendication 3, caractérisé par des premiers moyens d'indication (10) pour indiquer que ladite force d'aspiration est commandée audit premier niveau prédéterminé et des deuxièmes moyens d'indication (11) pour indiquer que ladite force d'aspiration est commandée audit deuxième niveau prédéterminé.
